Europäisches Patentamt

European Patent Office

Office européen des brevets

(19)

(11) Publication number: **0 078 164**
B1

(12) **EUROPEAN PATENT SPECIFICATION**

(45) Date of publication of patent specification: **13.01.88**

(51) Int. Cl.⁴: **C 02 F 1/22, B 01 D 9/04**

(21) Application number: **82305623.9**

(22) Date of filing: **22.10.82**

(54) Separation of a mixture by the vacuum freezing vapor desublimation desublimate vaporization process.

(30) Priority: **28.10.81 US 315858**

(43) Date of publication of application:
**04.05.83 Bulletin 83/18**

(45) Publication of the grant of the patent:
**13.01.88 Bulletin 88/02**

(84) Designated Contracting States:
**AT BE CH DE FR GB IT LI LU NL SE**

(56) References cited:
**EP-A-0 015 157
DE-A-2 846 564
US-A-3 714 791
US-A-4 003 213
US-A-4 218 893**

(73) Proprietor: **Cheng, Chen-Yen
9605 La Playa Street, NE.
Albuquerque New Mexico, 87111 (US)**
(73) Proprietor: **Cheng, Sing-Wang
9605 La Playa Street, NE
Albuquerque New Mexico 87111 (US)**

(72) Inventor: **Cheng, Chen-Yen
9605 La Playa Street, NE.
Albuquerque New Mexico, 87111 (US)**
Inventor: **Cheng, Sing-Wang
9605 La Playa Street, NE
Albuquerque New Mexico 87111 (US)**

(74) Representative: **Wells, Keith Raymond et al
POTTS, KERR & CO. 15 Hamilton Square
Birkenhead Merseyside L41 6BR (GB)**

Courier Press, Leamington Spa, England.

## Description

### Background of the invention

The present invention relates to an improved vacuum freezing process which can be used for separating solvent from a solution containing one or more non-volatile solutes. The process can therefore be used for desalinating sea water and brackish water, renovating waste water, and concentrating both aqueous and non-aqueous solutions.

### Description of the prior art

Several vacuum freezing processes are already known in the desalination field. Specific examples of such processes are (1) Vacuum-Freezing Vapour-Compression (VFVC) Process developed by Colt Industries, (2) Vacuum-Freezing Vapour Absorption (VFVA) Process developed by Carrier Corporation, (3) Vacuum-Freezing Ejector-Absorption (VFEA) Process developed by Colt Industries, (4) Vacuum-Freezing Solid-Condensation (VFSC) Process developed in the Catholic University of America (5) Absorption Freezing Vapour Compression (AFVC) Process introduced by Concentration Specialists, Inc., and (b) Vacuum Freezing High Pressure Ice Melting (VFPIM) Process introduced by Chen-Yen Cheng and Sing-Wang Cheng.

In any vacuum freezing process, there is a step of flash vapourizing a feed mixture so as to form a first low pressure vapour and a mass of solvent crystals. Since solid, liquid and vapour phases are involved in the process, it is referred to as a solid-liquid-vapour three-phase fractionation process or more simply, as a three-phase fractionation process. It is to be noted that the Distillative Freezing Process described and claimed in U.S. Patent 4,218,893 is also a three-phase fractionation process, and there are some superficial similarities in operation between such known process and a vacuum freezing process. However, it must be also be noted that a Distillative Freezing Process is not a vacuum freezing process as described and claimed in the present application. The vacuum freezing processes and the Distillative Freezing Process are described hereinafter and the differences therebetween will become apparent therefrom.

In all of these vacuum freezing processes, an aqueous solution is introduced into a chamber maintained at a pressure somewhat lower that the vapour pressure of the solution at the freezing temperature of the solution. This causes the simultaneous flash vapourization of the water and the formation of ice crystals. As a result, low pressure water vapour and an ice-mother liquor slurry are formed. In the case of sea water desalination, this pressure is of the order of 3.5 Torr. The low pressure water vapour formed must be removed and condensed whilst the ice crystals must be separated from the mother liquor and the resulting purified ice melted to yield fresh water.

Furthermore, the heat released in condensing the vapour has to be utilized to supply the heat necessary to melt the ice. The above identified processes described different methods of vapour removal, of condensing the vapour and of accomplishing the heat reuse.

The Vacuum Freezing Vapour Compression Process is described in the Office of Saline Water, Research and Development Report No. 295. In such process, the low pressure water vapour is compressed to a pressure higher than the triple point pressure of water (4.58 Torr). It is then brought in direct contact with purified ice, thereby simultaneously condensing the water vapour and melting the ice. The main disadvantages of this process are that the compressor, specifically designed to compress the low pressure water vapour must be used but such compressor is not reliable in operation and the efficiency thereof is low.

The Vacuum Freezing Vapour Absorption Process was developed by Carrier Corporation prior to 1964, but the use thereof has since been discontinued. The process is described in the Office of Saline Water, Research and Development Report No. 113. In this process, the low pressure water vapour is absorbed by a concentrated lithium bromide solution. The dilute solution is re-concentrated by evapouration and the water vapour so formed is condensed to produce fresh water. The heat of absorption is removed by a recycled stream of water passing through a heat transfer surface. The water stream is used to melt the ice crystals.

The Vacuum Freezing Ejector absorption Process was also developed by Colt Industries and is described in Office of Saline Water, Research and Development Report No. 744. In such process, the low pressure water vapour obtained in the freezing step is compressed by a combination of a steam ejector and an absorber loop. A concentrated sodium hydroxide solution is used to absorb a part of the low pressure vapour, the diluted sodium hydroxide solution then being boiled to produce water vapour at 300 Torr and to regenerate the concentrated solution. In the ejector, the water vapour at 300 Torr is used to compress the remaining low pressure water vapour.

The Vacuum-Freezing Solid-Condensation Process was developed by Professors H. M. Curran and C. P. Howard of the Catholic University of America and is described in Office of Saline Water, Research and Development Report No. 511. In such process, a refrigerant such as Freon-12 (Registered Trade Mark) is used to remove the latent heat released in the conversion of the low pressure vapour into ice and to supply the latent heat needed for melting the ice formed in the freezing step and the ice produced from the low pressure water vapour.

The Absorption Freezing Vapour Compression (AFVC) Process has been recently introduced by Concentration Specialists, Inc., Andover, Mass. and a 94,500 lpd pilot plant has been built at the Office of Water Research and Technology, Wrightsville Beach Test Station. The absorption freezing vapour compression (FAVC) Process is a vacuum freezing process in which the freezing is effected in a stirred tank crystallizer by the evapouration of water vapour, which vapour is, in turn, absorbed in an adjacent chamber by a concentrated sodium chloride solution. The sodium chloride solution, diluted by the water vapour, is pumped to a generator where it is re-concentrated to its original strength in a vapour compression cycle using a closed circuit refrigerant as the working fluid. The vapour compression cycle operates between the absorber and generator, the heat being produced during absorption being pumped up to a level at which it can be used to evapourate the absorbate in the generator. The vapour liberated in the generator is used to melt the ice by direct contact.

In the Vacuum-Freezing High Pressure Ice Melting Proces described in United States Patent Specification No. 4,236,382, an aqueous solution is flash vapourized under a reduced pressure such that low pressure water vapour and ice crystals are formed simultaneously. The ice thus formed is first purified in a counter-washer and the melted in heat conductive conduits under a high pressure (e.g. 61 million newtons/m$^2$) and the low pressure water vapour is desublimed to form a desublimate of ice on the exterior of the conduits. The released latent heat of desublimation is utilized to supply the heat necessary for the ice-melting operation. The desublimate is removed intermittently by an in-situ dissolution operation utilizing an aqueous solution such as the feed solution or the concentrate. An approximately equivalent amount of ice is formed inside the conduits by an exchange freezing operation. The ice thus formed is also melted by the high pressure ice melting operation described hereinbefore.

In European Patent Specification No. 0015157 (Application No. 80300533.9), there is described and claimd a process in which an aqueous solution is flash vapourized under a reduced pressure to form, simultaneously, a low pressure water vapour and ice crystals. The ice formed may, if desired, be purified and is then melted inside thermally conductive conduits under a high pressure of, for example, 600 atm. The low pressure water vapour is desublimed to form ice on the exterior of the conduits. The latent heat of desublimation released may be utilized in supplying the heat needed in the ice-melting operation. The desublimate is removed intermittently by an in-situ dissolution operation utilizing an aqueous solution such as the feed solution. A substantially equivalent amount of ice is formed inside conduits by an exchange freezing operation. The ice so formed is also melted. An apparatus is provided for carrying out such a process.

In United States Patent Specification No. 3714791, there is described and claimed a batch evapourative desalination method and apparatus having a pair of similar systems for substantially continuous output. Each system has three evacuated chambers in vapour communication with each other. In the first chamber, precooled seawater is sprayed for partial vapourization and consequent formation of ice crystals as latent heat is removed from the seawater. Ice crystals are permitted to accumulate in the first chamber and water vapour flows to a second chamber in which refrigeration coils, preferably cooled by cold natural gas, are maintained at a temperature below the triple point so that condenses thereon. After a selected interval, spraying of precooled seawater into the first chamber and refrigeration in the second chamber are stopped. Warmer seawater is then sprayed into a third chamber also maintained at low pressure so that a portion of the water vapourizes but without formation of ice in the brine. The water vapour flows to the first and second chambers and condenses on the ice therein to transfer latent heat for melting the ice; Fresh water is withdrawn from the second chamber. Fresh water in the first chamber pre-colates through the ice crystals for washing and when residual brine is removed, fresh water is withdrawn from this chamber also. In a preferred embodiment, natural gas refrigerant is expanded through a turbine is producing shaft horsepower for pumping seawater. The apparatus is arranged with hydraulic legs beneath the first and third chamber at a height at least equal to the head of water at one atmosphere pressure for maintaining low pressure in the three chambers. In a preferred arrangement, a reversible refrigeration loop may be provided between a pair of second chambers for reversibly transferring heat therebetween.

The Distillative Freezing Process described in U.S. Patent 4,218,893 is useful for separating a mixture containing at least two volatile components, denoted respectively as A-component and B-component, by simultaneously vaporizing the two components fron the mixture under a sufficiently reduced pressure to cause simultaneous crystallization of the B-component. The vapour mixture obtained is brought to a condensed state either by a simple condensation operation or a condensation-desublimation operation without being substantially pressurized. The process may be conducted so as to eliminate completely the liquid phase and to bring the mixture into the two phase solid-vapour region. Then, the solid phase is no longer contaminated by the adhering liquid phase and gives a high purity B-component on melting. The process is particularly useful in separating mixtures containing close boiling components, such as styrene-ethyl benzene mixtures and p-xylene/m-xylene mixtures. Some distinguishing features between the Distillative Freezing process and a vacuum freezing process are as follows:

(a) In the vacuum freezing process, the feed mixture being processed contains a solvent and at least one low volatility solute; in the Distillative Freezing Process, both the solvent and all the solute(s) in the feed are volatile.

(b) In the Distillative Freezing Process, all the impurities can be transferred to the vapour phase; in the vacuum freezing process, the low volatility solute(s) remains in the liquid phase.

The major difficulties which conventional vacuum freezing processes suffer from are chiefly in respect of the manner in which the low pressure water vapour formed in the vacuum freezing zone is removed from the zone and the manner in which it is transformed into a liquid state. The present invention seeks to provide a convenient method for achieving these steps without, however, using a compressor to compress the vapour, without using an absorbing solution to absorb the vapour and without pressurizing the ice. In such process, the low pressure vapour is desublimed without pressurization and the desublimate is then melted and vaporized to form a vapour which is at a pressure higher than the triple point pressure. The process is highly energy efficient and can be operated both simply and reliably.

Brief description of the invention

According to the present invention there is provided a process for separating a mixture containing a solvent and at least one low volatility solute by forming a mass of crystals of the solvent comprising the steps of flash vaporizing the mixture under a reduced pressure so as to form, simultaneously, crystals of the solvent, the flash vaporization producing a first vapour having a pressure lower than the triple point pressure of the solvent and a first condensed mass containing the solvent crystals, cooling the first vapour under a pressure lower than the said triple point pressure to transform the first vapour into a second condensed mass containing a mass of solvent solid characterised by melting the solvent solid to convert the second condensed mass into a melt liquid and vaporizing the melt liquid to form a second vapour having a pressure higher than the triple point pressure, and effecting heat exchange between the second vapour and the solvent crystals derived from the first condensed mass so as to condense the second vapour and melt the solvent crystals.

In another aspect, the present invention provides a process for subjecting a mixture containing a volatile solvent and at least one low volatility solute to freezing and melting operations, comprising a first step of flash vaporizing the mixture to form a first vapour having a pressure lower then the triple point pressure of the solvent and a first condensed mass containing a mass of solvent crystals and a second step of removing heat from the first vapor at a pressure lower then the triple point pressure to convert the first vapour into a second condensed mass containing a mass of solvent solid, characterized in that the mixture is processed in a system comprising a vacuum freezing zone (Zone 1), a vapour processing zone comprising two or more vapour processing sub-zones (Zone 2), a melting zone (Zone 3), first valving means interposed between the vacuum freezing zone and the vapour processing sub-zones, and conduit means for transporting working media in the vapour processing zone for removing heat from and supplying heat to said vapour processing zone, the first step of flash vaporizing the mixture being effected in the vacuum freezing zone while the zone is in vapour communication with one or more on vapour processing sub-zones, and the second step being effected by admitting the first vapour into the vapour processing sub-zones and removing heat through the conduit means, the process further comprising a third step of supplying heat to the second condensed mass while the second condensed mass is pressure isolated from the vacuum freezing zone to melt the solvent solid and form a melt liquid, a further step of supplying heat to a mass of solvent liquid in the vapour processing zone to vaporize the solvent liquid while the solvent liquid is pressure isolated from the vacuum freezing zone and is in pressure communication with the melting zone and forms a second vapour having a pressure higher than the triple point pressure of the solvent and a fifth step of admitting the second vapour and a mass of solvent crystals derived from the first condensed mass into the melting zone and establishing a heat exchange relation therebetween to condense the second vapour and to melt the mass of solvent crystals.

The present invention also provides a process for subjecting a mixture containing a volatile solvent and at least one low volatility solute to freezing and melting operations, characterised in that the mixture is processed in a system comprising a vacuum freezing-crystal melting zone (Zone 1) and a vapour processing zone (Zone 2), valve means between the vacuum freezing-crystal melting zone and the vapour processing zone and conduit means for transporting working media in the vapour processing zone for removing heat from, and supplying heat, to the zone, the process comprising the steps of flash vaporizing the mixture in the vacuum freezing-crystal melting zone with the first valve means open to form a first vapour having a pressure lower than the triple point pressure of the solvent and a first condensed mass containing solvent crystals, admitting the first vapour into the vapour processing zone and removing heat through the conduit means to transform the first vapour into a second condensed mass containing a mass of solvent solid, supplying heat to the second condensed mass with the first valve means closed to melt the solvent solid and to form a melt liquid, supplying heat to the melt liquid with the first valve means open to vaporize the melt liquid to form a second vapour having a pressure higher than the triple point pressure of the solvent and admitting the second vapour into the vacuum freezing-crystal melting zone and establishing a heat exchange relationship between the second vapour and the first condensed mass to condense the second vapour and to thaw the first condensed mass.

Yet further, the present inention provides an integrated vapour processing conduit for converting a first vapour containing a major substance, the vapour having a pressure lower than the triple point pressure of the major substance, into a second vapour having a pressure higher than said triple point pressure by forming a condensed mass containing a mass of solid of the substance from the first vapour, melting the mass of solid in the condensed mass to form a mass of melt liquid and vaporizing the mass of melt liquid to form the second vapour, the apparatus characterised by a first conduit for transporting working media to remove the heat released in forming the condensed mass through the conduit wall and supply heat needed during the melting and vaporization operations through the conduit wall, melt storage means for storing a quantity of the melt liquid, the melt storage means being disposed near the first conduit and a wick structure which transfers the melt liquid to the outer wall of the first conduit.

It has been long recognized that a vacuum freezing process has several advantages over a distillation process in desalinating sea water and brackish water and in concentrating industrial solutions. Several vacuum freezing processes have been proposed and actively investigated. However, none of these processes have been developed into a successful commercial process. The reasons for the failures are that the methods used in these processes to handle the first low pressure vapour have not been conducted reliably and economically. In the process of the present application, the first low pressure vapour is handled in a unique way involving multiple phase transformation operations. Thus, the difficulties encountered in the previous vacuum freezing processes have been avoided. Because of this unique way of handling the first low pressure vapour, the new process of the present application can be operated reliably and economically.

Brief description of the drawings

The invention will be further described by way of example, with reference to the accompanying drawings, in which:—

Figures 1a and 1b each illustrate, schematically, a system in which the process of the present invention may be carried out,

Figure 2 shows a plot of pressure against temperature illustating the phase behaviours of water and an aqueous solution and the conditions under which the steps of processing the aqueous solution are conducted,

Figure 3 shows a plot similar to Figure 2 illustrating the phase behaviors of a non-aqueous solvent and a non-aqueous solution and the conditions under which the steps of processing the non-aqueous solution are conducted,

Figure 4 illustrates a processing system in accordance with the present invention and is a flow sheet of the separation process of the present invention,

Figure 5a shows a cross-sectional view of a vapour processing unit utilised in a vapour processing zone during the process of the present inention, and

Figure 5b shows a side view of the vapour processing unit shown in Figure 5a,

Figure 6a—c show the progress of a vapour desublimation step forming a part of the process of the present invention and conducted on a vapour processing unit as shown in Figures 5a and b. Figures 7a—c show the progress of desublimate melting step forming part of the process of the present invention and conducted on a vapour processing unit as shown in Figures 5a and b. Figures 8a—c show the progress of a melt vaporizing step forming part of the process of the present invention and conducted on a vapour processing unit as shown in Figures 5a and b, and

Figures 9 illustrates, schematically, a system in which a sludge may be conditioned by freezing and thawing operations in a process in accordance with the present invention.

Description of preferred embodiment of the invention

A vacuum Freezing Vapour Desublimation Desublimate Vaporization Process may be used to separate a mixture containing a volatile solvent and one or more low volatility solutes into a solvent-rich portion and a solvent-lean portion and is also used simply to condition a mixture, such as a sludge, by freezing and thawing operations. In the process, a feed mixture is flash vaporized under a reduced pressure to form simultaneously, solvent crystals. The feed is thereby transformed into a solvent enriched or first vapour having a pressure lower than the triple point pressure of the solvent and a first condensed mass containing the solvent crystals. The process incorporates a step of converting the first vapour into a second vapour having a pressure higher than the triple point pressure of the solvent. The conversion is achieved by (1) desubliming the first vapour to form a mass of desublimate, (2) melting the desublimate to form a melt and (3) vaporizing the melt to form the second vapour. The second vapour is then brought in contact with the solvent crystals which melts the crystals and condenses the vapour.

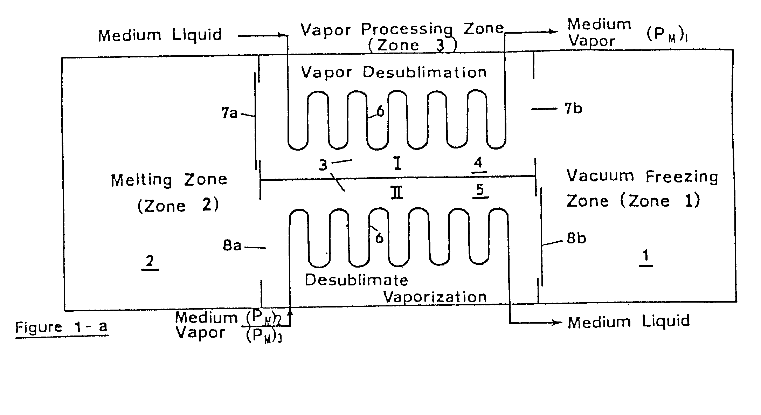

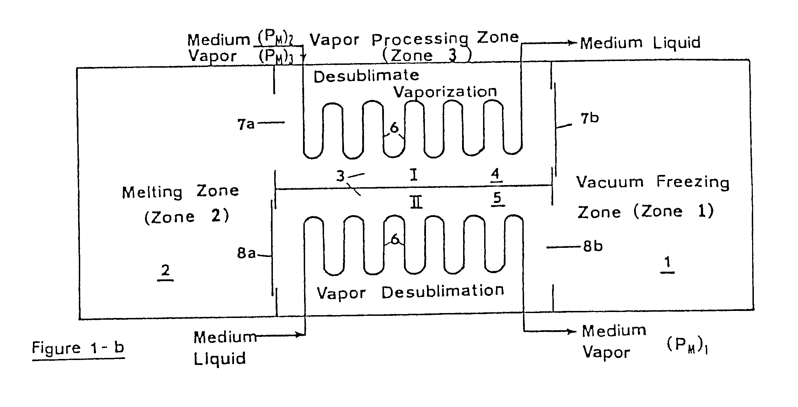

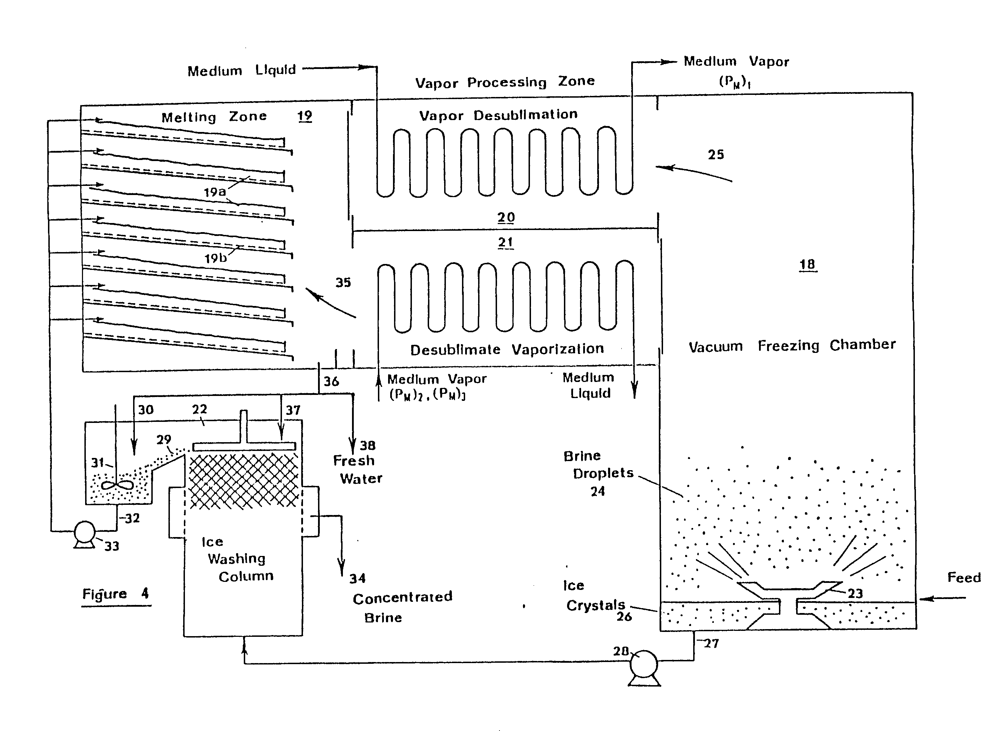

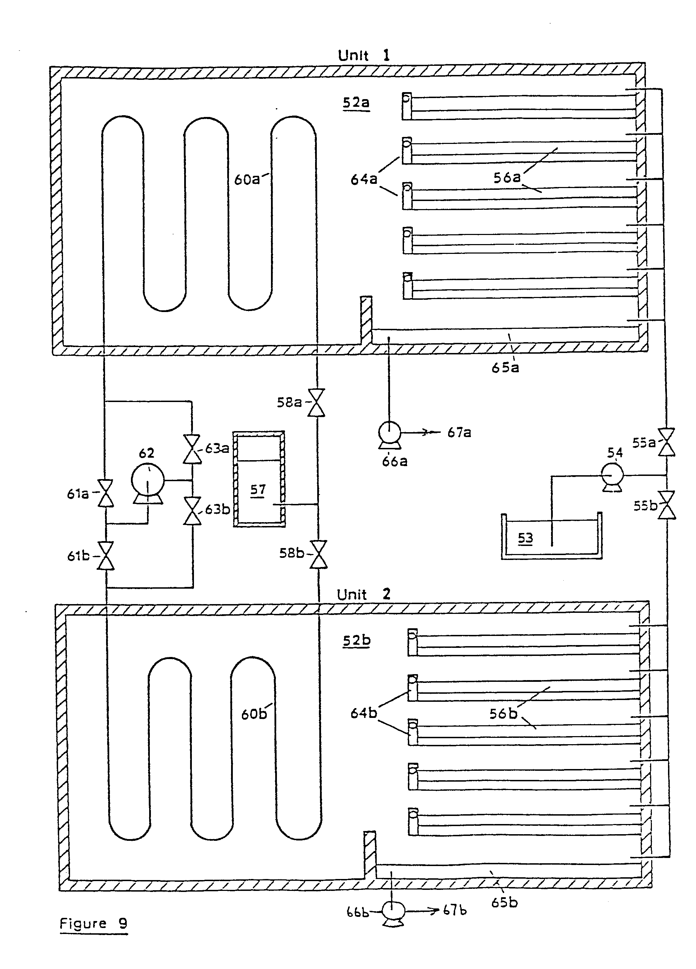

There are two basic types of processes: A Type 1 process includes a step of separating the first condensed mass into purified solvent crystals and mother liquor (or concentrate); in a Type 2 process, such a step is omitted. Type 1 processes may be used for desalinating sea water and brackish water; concentrating industrial aqueous solutions, such as solutions of sugar, caustic and acid, and separating organic solutions such as those obtained in extraction processes. Type 2 processes are used for conditioning mixtures by freezing and thawing operations, such as gels and sludges, to facilitate dewatering. Figures 1a and 1b illustrate a general system in which both Type 1 and Type 2 processes can be carried out, Figure 4 illustates a system in which a Type 1 process can be carried out and Figure 9 illustrates a system suitable for carrying out a Type 2 process.

A Type 1 process comprises the following five steps:

Step 1 Vacuum crystallization.

A feed mixture is flash vaporized under a reduced pressure and simultaneously forms solvent crystals. The feed mixture is thus converted into a solvent-enriched first vapour and a first condensed mass which contains the solvent crystals. The pressure of the first vapour is lower than the triple point pressure of the solvent.

Step 2 Crystal purification

The first condensed mass obtained in Step 1 is separated and washed to give a mass of purified solvent crystals and a mother liquor. The mother liquor is heat-exchanged and becomes a product (concentrate).

Step 3 Vapour desublimation

The first vapour formed in Step 1 is cooled, without substantial pressurization, by passing a cooling medium through vapour processing conduits to be described hereinafter. Since the vapour is substantially pure solvent and since the pressure thereof is lower than the triple point pressure of the solvent, it desublimes to form a mass of desublimate on the vapour processing conduits.

Step 4 Desublimate vaporization

This step comprises two sub-steps which are a desublimate melting step (step 4a) and a melt vaporization step (step 4b). These sub-steps are conducted by passing a heating medium through the vapour processing conduits. The conduits are so constructed that the melt formed stays in the vicinity of the conduits and the melt is supplied to the outer walls of the conduits during the melt vaporization sub-step by a wicking mechanism. The desublimate is thereby transformed into a second vapour having a pressure higher than the triple point pressure of the solvent.

Step 5 Crystal melting

In this step, the second vapour formed in Step 4 is brought in contact with the purified solvent crystals obtained in Step 2. Since the pressure of the second vapour is higher than the triple point pressure of the solvent, it condenses at a temperature higher than the triple point temperature and melts the solvent crystals. Both the condensate and the melt then become purified solvent.

In a Type 2 process, Step 2 described above is omitted and, in Step 5, the second vapour is contacted with the first condensed mass obtained in Step 1 so as to condense the vapour and thaw the first condensed mass.

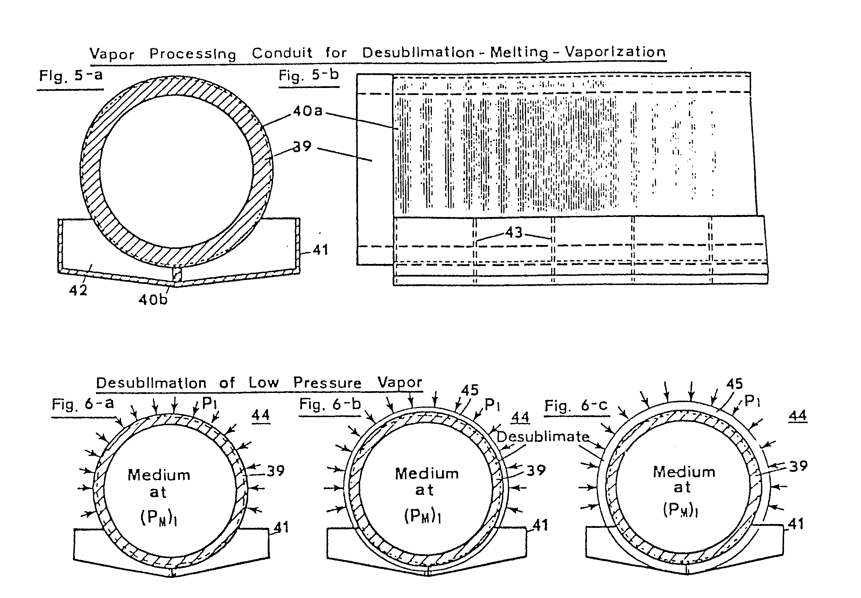

As already mentioned, Figures 1a and 1b illustrate a system in which either a Type 1 process or a Type 2 process may be conducted. The system comprises a vacuum freezing zone 1 (zone 1), a melting zone 2 (zone 2) and a vapour processing zone 3 (zone 3), which latter may comprise two or more sub-zones 4, 5. Two vapour processing sub-zones are shown in the Figures. Each of these sub-zones contain a plurality of vapour processing conduits 6, shown in Figures 5a and 5b and to be described in greater detail hereinafter. Each sub-zone is alternately used for vapour desublimation and desublimate vaporization operations. The vacuum freezing step (Step 1) is conducted in the vacuum freezing zone (zone 1); desublimation of the first vapour (Step 3) and vaporization of the desublimiate (Step 4) are conducted cyclically in each of the vapour processing sub-zones, and condensation of the second vapour and melting of solvent crystals of the first condensed mass are conducted in the melting zone (zone 2). The first and second vapour processing sub-zones 4 and 5 are each provided with two gates 7a, 7b and 8a, 8b respectively. The apparatus used in the crystal purification step is not shown in the figures.

The operations conducted in the first vapour processing sub-zone 4 will now be described.

(1) Vapour desublimation step (Step 3)

During this step, gate 7a (see Figure 1a) is closed and gate 7b is open. This allows the first vapour formed in Zone 1 to enter the sub-zone 4 and isolates the sub-zone 4 from Zone 2. A working medium liquid is vaporized in the vapour processing conduits 6 under a pressure $(P_M)_1$ which cools the first vapour and a mass of desublimate is formed on the conduits.

(2) Desublimate Melting Sub-step (Step 4a)

During this step, both gates 7a and 7b are closed and a working medium vapour is condensed in the vapour processing conduits 6 at a pressure $(P_M)_2$ to melt the desublimate and form a melt. The melt is maintained adjacent the conduits. As the desublimate melts, the pressure in the space externally of the conduits, rises to, or above, the triple point pressure of the solvent. Accordingly, the gate 7b must be closed to prevent solvent vapour flowing from the sub-zone 4 to Zone 1. When both gates 7a and 7b are closed, the sub-zone 4 is isolated and the pressure tends to rise above the triple point pressure of the solvent. This pressure rise increases the rate of melting the desublimate.

(3) Melt vaporization sub-step (Step 4b)

Referring now to Figure 1b, during this step, gate 7a is open and gate 7b is closed. A working medium vapour is condensed in the vapour processing conduits 6 at a pressure $(P_M)_3$ to vaporise the melt formed in Step 4a. The melt is supplied to the outer walls of the conduits by a wicking mechanism or by a pumping operation. The melt is thus converted into a second vapour having a pressure higher than the triple point pressure of the solvent. The second vapour enters the melting zone to be condensed and also to melt the solvent crystals therein.

The operations in the second vapour processing sub-zone 5 are carried out in a similar manner.

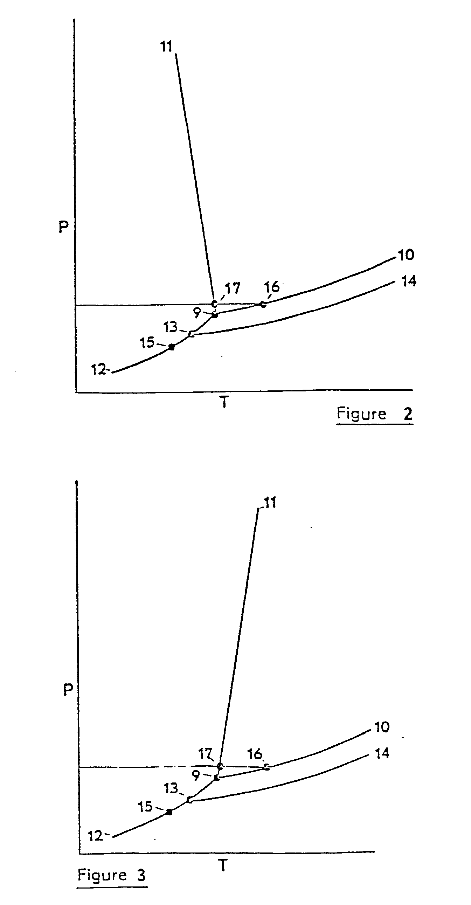

The operating conditions for the above- described steps will now be explained with reference to the phase diagrams shown in Figures 2 and 3. Figure 2 illustrates the phase behavior of water and an aqueous solution. It shows the triple point of water 9 (0.01°C, 4.58 Torr), vaporisation line 9—10, melting line 9—11 and sublimation line 9—12. The vapour pressure line of an aqueous solution containing one or more non-volatile solutes is shown by line 13—14. The three phase point representing the condition under which three phases, ice, water vapour and the aqueous solution, co-exist and attained equilibrium is shown as point 13. Referring to Figures 1a, 1b and 2, let the concentration of the solution in the freezer be such that its vapour pressure curve is represented by line 13—14. The first vapour leaving the vacuum freezing zone is at a pressure somewhat lower than the pressure at the three phase point 13. This vapour then enters a vapour processing sub-zone, is cooled and becomes a desublimate on the vapour processing conduits at a pressure 15 which is lower than that of the three phase pressure 13. The desublimate is then melted and vaporized.

The second vapour so formed is at a pressure 16 which is higher then the triple point pressure 9 of the solvent. The melting temperature of the purified solvent crystals is represented by point 17. When the second vapour is brought into contact with the solvent crystals, heat is transferred from the vapour to the solid so that condensation of the vapour and melting of the solid takes place simultaneously. Both the melt and the condensate become a product, in this case, fresh water. Figure 3 illustrates the phase behavior of a non-aqueous solvent and a solution of the solvent and one or more low volatility solutes. The operational steps used in separating a non-aqueous solution are similar to those described above with reference to the aqueous solution.

Figure 4 illustrates a system for conducting a Type 1 process, such as sea water desalination. The system comprises a vacuum freezing chamber 18, a melting chamber 19, vapour processing chambers 20, 21, and an ice washing column 22. The feed solution is precooled by heat exchange with product streams and is introduced into the vacuum freezing chamber 18. An agitating spraying device 23 causes the brine to be dispersed in the form of droplets 24 which form a first vapour 25 and ice crystals 26. Such an operation has been used by Colt Industries and Concentration Specialists. It is also possible to use an extended surface freezer developed by one of the present applicants in the University of New Mexico. The feed is, in such case, converted into a first vapour 25 and a slush 27 (the first condensed mass) containing ice crystals and mother liquor.

The ice-brine slush 27 is transferred from the vacuum feeezer 18 to the ice washing column 22 by means of a pump 28. The operation of an ice washing column is described in the Office of Saline Water, Research and Development Report No. 295. Similar washing columns can be used in purifying other solvent crystals. Other types of crystal washing equipments are described in a book entitled "Fractional Solidification" edited by Zief and Wilcox and published by Dekker Co. Purified crystals 29 are harvested at the top of the washing column. Some fresh water 30 is added to the purified crystals and agitated by an agitator 31 to form an ice-water slurry 32 and the slurry is transferred by a punp 33 to the melting chamber 19. Concentrated brine 34 is discharged from the washing column, undergoes heat exchange with further feed solution and becomes a product stream.

The first vapour 25 enters the vapour processing chambers 20 21, and is desublimed to form a mass of desublimate. The desublimate is then melted to form a melt mass which is then vaporized to form a second vapour 35. These operations have been described hereinbefore with reference to Figures 1a and 1b. Since these operations are characteristic features of the present invention, more detailed description thereof is given hereinafter with reference to Figures 5 to 8.

The ice-water slurry 32 and the second vapour 35 are introduced into the melting chamber, whereupon vapour interacts with the ice. A plurality of melting trays 19a may be installed in the chamber and screens may be installed on the trays to allow water to drain out therefrom. In this way, the second vapour has better access to the solvent crystals and the rate of melting is enhanced. As the results, the vapour is condensed and the ice is melted. Fresh water 36 is discharged from the melting chamber. A part 37 of this fresh water 36 is used in the ice washing column, a further part 30 is added to the purified ice to form the ice-water slurry 32, and the remainder 38 becomes fresh water product. The product water is heat exchanged with free and becomes fresh water product.

The first vapour is converted into the second vapour by interacting with working media through the vapour processing conduits, as has previously been stated. The vapour processing steps are (1) desublimation of the first vapour, (2) melting of the desublimate and (3) vaporization of the melt. When a storage region is not provided near a vapour processing conduit, the melt formed in the melting step drips away from the conduit. In such circumstances, it is necessary to apply the melt onto the conduit surface during a melt vaporization step and, indeed, a plant can be operated in this way. However, it is more convenient to use an integrated vapour processing conduit which is provided with a melt storage region adjacent the conduit and a wick structure for feeding the melt on the outer wall during the melt vaporization step. Such an integrated conduit is illustrated in Figures 5a and 5b. The desublimation step, the melting step and the melt vaporization step which are conducted on an integrated vapour processing conduit are illustrated in Figures 6a to 6c, Figures 7a to 7c and Figures 8a to 8c respectively.

Figures 5a and Figure 5b illustrate, respectively, a transverse cross section and a side view of an integrated vapour processing conduit which comprises a conduit 39 provided with a wicking structure 40 and a trough 41 for storing the melt 42. The region between the conduit and the trough may be separated into compartments by partitions 43. A thin layer of melt is maintained on the outer wall of the conduit during melting and vaporization steps by the action of the wicking structure. Many types of wick structures and many materials have been used in manufacturing heat pipes. Such structures and materials are described in several books on heat pipes, such as "Heat Pipe Theory and Practice", written by S. W. Chi and published by McGraw-Hill Company and "Heat Pipes" written by P. Dunn and D. A Reay and published by Pergamon Press. Wick structures and materials used in heat pipes can be used in the manufacture of integrated vapour processing conduits. The purposes of the wick structure in a vapour processing conduit are threefold: (i) to provide the necessary flow passages for transferring melt from the storage to the entire external wall of the conduit (ii) to provide surface pores at the liquid-vapour interface for the development of capillary pumping pressure, and (iii) to provide a heat flow path from the external wall to the liquid-vapor interface. Some examples of wick structures are wrapped screen sintered metal, circumferential grooves and screen covered circumferential grooves and fabric and paper.

Figures 6a to 6c illustrate the progress of a desublimation step. During this step, a first vapour 44 is brought in contact with the outer wall of the conduit 39 at a pressure $P_1$. A working medium undergoes an endothermic transformation within the conduit to remove the latent heat of desublimation therefrom. When the medium used is a solidification-melting type medium (denoted as an S/L medium), the transformation is melting under pressure $(P_M)_1$. When the medium used as a vaporization-condensation type medium (denoted as L/V medium), the transformation is vaporization under pressure $(P_M)_1$. One may also used an endothermic chemical reaction to remove the latent heat of desublimation. As the result, a layer of desublimate 45 is formed on the conduit.

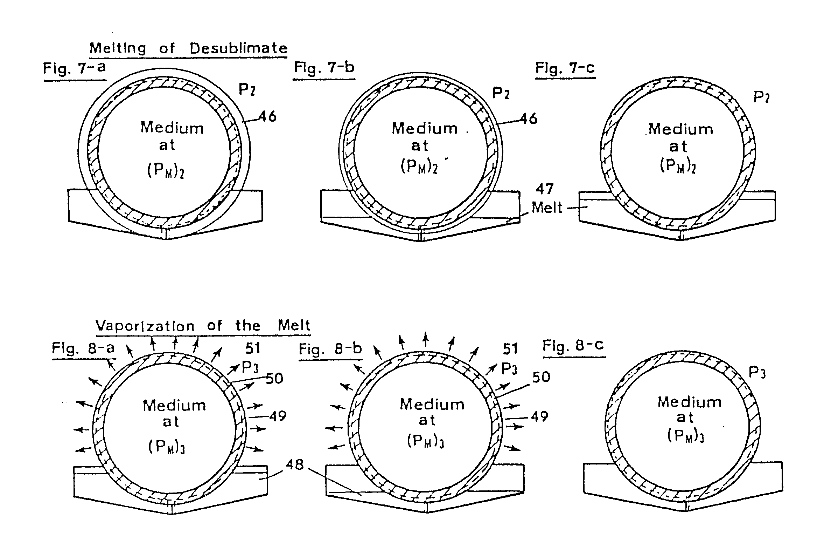

Figures 7a to 7c illustrate the progress of a desublimate melting step. During this step, the vapour processing subzone is isolated from the vacuum freezing zone and the melting zone and working medium undergoes an exothermic transformation within the conduit to supply the necessary latent heat for melting the desublimate. When the medium used is a solidification melting type medium, the transformation is solidification at pressure $(P_M)_2$; when the medium used is a vaporization-condensation type medium, the transformation is condensation at pressure $(P_M)_2$. An exothermic chemical reaction may also be used. During this step, the pressure in the processing zone rises to a pressure $P_2$ which is somewhat higher than the triple point pressure of the solvent. Heat transfer to the desublimate may be by direct heat transfer from the wall to the desublimate, by heat transfer through a layer of melt and then to the desublimate, and by vaporization of an amount of melt and an interaction between the vapour and the desublimate. The last method enhances the rate of melting of the desublimate. The desublimate 46 is transformed into melt. Most of the melt 47 is collected in the trough. However, a small amount of the melt is retained even at the top part of the external wall due to the presence of the wick structure.

Figures 8a to 8c illustrate the progress of a melt vaporization step. During this step, the vapour processing sub-zone is isolated from the vacuum freezing zone but is connected to the melting zone and a working medium undergoes an exothermic transformation within the conduit to supply the latent heat necessary for vaporizing the melt. When the medium used is a solidification-melting type medium, the transformation is solidification at pressure $(P_M)_3$; when the medium used in a vaporization-melting type medium, the transformation is condensation at pressure $(P_M)_3$. Again, an exothermic chemical reaction may also be utilized. During this step, melt 48 is transferred from the storage region to the exterior wall 49 by the wick structure 50 and is vaporised to become the second vapour 51 at a pressure $P_3$ which is somewhat higher than the triple point pressure of the solvent.

In the description given above, it has been assumed that each integrated vapour processing conduit is provided with a separate trough for storing the melt. However, it is advantageous to have a row of conduits sharing a common melt storage zone or even to have a number of rows of conduits sharing a common melt storage zone. A wick 40b is used to connect each conduit to the storage zone and to provide a passage for liquid from the storage zone to the outer wall of the conduit.

Figure 9 illustrates a system in which a Type 2 process can be effected. It is to be noted that, in a Type 2 process, there is no need for a crystal purification step to be carried out and, in the crystal melting step, the second vapour is contacted with the first condensed mass obtained in the vacuum crystallization step. Because of the omission of the crystal purification step, a region may be alternately used as a vacuum crystallization zone and a melting zone and the first condensed mass obtained in a vacuum crystallization step may be melted in-situ during the immediately following melting step.

The system illustrated in Figure 9 comprises two units 52a and 52b. While vacuum freezing and vapour desublimation operations (mode 1) are conducted in one unit, desublimate vaporization and crystal melting operations (mode 2) are conducted in the other unit. An L/v type working may be vaporized at pressure $(P_M)_1$ in the vapour processing conduits of one unit and condensed at pressures $(P_M)_2$ and $(P_M)_3$ in the other unit. The operations of Unit 1 will now be described.

A quantity of feed sludge is pumped from storage zone 53 through a pump 54, and valve 55a and is then introduced onto freezer trays 56a. The valve 55a is then closed. A liquid working medium is transferred from a storage zone 57 through a valve 58a and is vaporized in integrated vapour processing conduits 60a. The unit then enters mode 1 operations. The sludge on the freezer trays flash vaporizes and solvent crystals are formed on the tray. The sludge is transformed into a first vapour and an almost completely frozen sludge. The first vapour desublimes on the conduits 60a. The medium vapour so formed flows through open valve 61a, valve 61b being closed and is compressed by a compressor 62. The compressed medium vapour then flows through valve 63b, valve 63a being closed, and is condensed in the conduits 60b. The condensate is returned to the medium storage zone 57 through valve 58b. The first unit then enters mode 2 operations. The medium vapour formed in the other unit enters the compressor 62 through valve 61b, valve 61a being closed, and the compressed medium vapour flow into the vapour processing conduits 60a (valve 63b being closed) and is condensed. The medium liquid then returns to the storage zone through valve 58a. The desublimate on the conduits 60a is melted and the melt is vaporized to form a second vapour. The second vapour contacts the frozen sludge on the trays 56a. The vapour is condensed and the sludge is thawed. The thawed sludge is discharged from the trays by opening gates 64a provided on the trays. The thawed sludge 65a is removed from the unit by a pump 66a. The frozen and thawed sludge 67a can be dewatered by a filtration operation. Operations conducted in Unit 2 are similar to those of Unit 1.

In the description given above, it has been assumed that the solute is non-volatile. However, with some modifications, the operational steps described above can be applied to a mixture containing a volatile solvent and at least one solute which has a low, but substantial, volatility. Referring to Type 1 process described, the modification to the process steps are described as follows:

(1) During the vacuum crystallization step (Step 1), the first vapour formed contains a small, but substantial, amount of the solute.

(2) In Step 3, when the first vapour is cooled without substantial pressurization, it is transformed into a second condensed mass which contains a major amount of solvent solid (desublimate) and some liquid (condensate). The liquid contains the solute.

(3) In Step 4, the desublimate is first melted so that the second condensed mass is first transformed into a melt liquid. The melt liquid is then vaporized to form a second vapour. The second vapour contains a low concentration of the solute.

(4) In Step 5, the second vapour is condensed and the purified solvent crystals are melted. When indirect contact heat exchange is used, the melt and the condensate become separate product streams. The condensate contains a low concentration of solute. When direct contact heat exchange is used, the melt and condensate join to form a product which contains a low concentration of solute.

The major product may be the concentrate obtained in the crystal purification step. The low concentration solution obtained in Step 5 may be recycled and reused in the plant.

Examples of application of such a method are the concentration of an aqueous acetic acid solution and an aqueous caprolactam.

**Claims**

1. A process for separating a mixture containing a solvent and at least are low volatility solute by forming a mass of crystals of the solvent comprising the steps of flash vaporizing the mixture under a reduced pressure so as to form, simultaneously, crystals of the solvent, the flash vaporization producing a first vapour having a pressure lower than the triple point pressure of the solvent and a first condensed mass containing the solvent crystals, cooling the first vapour under a pressure lower than the triple point pressure to transform the first vapour into a second condensed mass containing a mass of solvent solid, characterised by melting the solvent solid to convert the second condensed mass into a melt liquid and vaporizing a mass of solvent liquid to form a second vapour having a pressure higher than the triple point pressure, and effecting heat exchange between the second vapour and the solvent crystals derived from the first condensed mass so as to condense the second vapour and melt the solvent crystals.

2. A process as claimed in claim 1, characterized in that the step of effecting heat exchange between the second vapour and the solvent crystals is effected by bringing the second vapour into direct contact with the first condensed mass.

3. A process as claimed in claim 2, characterized by the additional step of separating the first condensed mass into a mass of purified solvent crystals and a concentrate, the heat exchange subsequently being effected between the second vapour and at least a portion of the mass of purified solvent crystals to melt the crystals and condense the second vapour, the melt and the condensate both being purified solvent.

4. A process as claimed in claim 3, characterized in that the step of effecting heat exchange between the second vapour and the purified solvent crystals is effected by bringing the second vapour into direct contact with the mass contaning the purified solvent crystals.

5. A process for subjecting a mixture containing a volatile solvent and at least one low volatility solute to freezing and melting operations, comprising a first step of flash vaporizing the mixture to form a first vapour having a pressure lower than the triple point pressure of the solvent and a first condensed mass containing a mass of solvent crystals and a second step of removing heat from the first vapour at a pressure lower than the triple point pressure to convert the first vapour into a second condensed mass containing a mass of solvent solid, characterized in that the mixture is porocessed in a system comprising a vacuum freezing zone (Zone 1), a vapour processing zone comprising two or more vapour processing sub-zones (Zone 2), a melting zone (Zone 3), first valving means interposed between the vacuum freezing zone and the vapour processing sub-zones, and conduit means for transporting working media in the vapour processing zone for removing heat from and supplying heat to said vapour processing zone, the first step of flash vaporizing the mixture being effected in the vacuum freezing zone while the zone is in vapour commuciation with one or more one vapour processing sub-zones, and the second step being effected by admitting the first vapour into the vapour processing sub-zones and removing heat through the conduit means, the process further comprising a third step of supplying heat to the second condensed mass while the second condensed mass is pressure isolated from the vacuum freezing zone to melt the solvent solid and form a melt liquid, a fourth step of supplying heat to a mass of solvent liquid in the vapour processing zone to vaporise the solvent liquid while the solent liquid is pressure isolated from the vacuum freezing zone and is in pressure communication with the melting zone and forms a second vapour having a pressure higher than the triple point pressure of the solvent and a fifth step of admitting the second vapour and a mass of solvent crystals derived from the first condensed mass into the melting zone and establishing a heat exchange relation therebetween to condense the second vapour and to melt the mass of solvent crystals.

6. A process as claimed in claim 5, characterized by the additional step of separating the first condensed mass into a mass of purified solvent crystals and a mother liquor, the mass of purified solvent crystals being thereafter subjected to the melting operation by heat exchange with the second vapour.

7. A process as claimed in any one of claims 1 to 6 characterized in that the said first step of flash vaporizing the mixture and the said fifth step of simultaneously condensing the second vapour and melting the mass of solvent crystals are conducted at least substantially continuously.

8. A process as claimed in any of claims 1 to 6 characterized in that the solvent is water.

9. A process for subjecting a mixture containing a volatile solvent and at least one low volatility solute to freezing and melting operations, characterized in that the mixture is processed in a system comprising a vacuum freezing-crystal melting zone (Zone 1) and a vapour processing zone (Zone 2), and conduit means for transporting working media in the vapour processing zone for removing heat from and supplying heat to the zone, the process comprising a first step of flash vaporizing the mixture in Zone 1 to form a first vapour having a pressure lower than the triple point pressure of the solvent and a first condensed mass containing solvent crystals and a second step of admitting the first vapour into Zone 2 and removing heat through the conduit means to transform the first vapour into a second condensed mass containing a mass of solvent solid, the said first step and second step being conducted simultaneously, a third step of supplying heat to the second condensed mass in Zone 2 to melt the second condensed mass and form a melt liquid, a fourth step of supplying heat to a mass of solvent liquid in Zone 2 to vaporize the solvent liquid to form a second vapour having a pressure higher than the triple point pressure of the solvent, and a fifth step of admitting the second vapour into Zone 1 and establishing a heat exchange relationship between the second vapour and the first condensed mass to thereby condense the second vapour and melt at least a part of the crystals derived from the first condensed mass.

10. An integrated vapour processing conduit for converting a first vapour containing a major substance, the vapour having a pressure lower than the triple point pressure of the major substance, into a second vapour having a pressure higher than said triple point pressure by forming a condensed mass containing a mass of solid of the substance from the first vapour, melting the mass of solid in the condensed mass to form a mass of melt liquid and vaporizing a mass of the major substance in liquid state to form the second vapour, the apparatus characterized by a first conduit for transporting working media to remove the heat released in forming the condensed mass through the conduit wall and supply heat needed during the melting and vaporization operations through the conduit wall, melt storage means for storing a quantity of the melt liquid, the melt storage means being disposed near the first conduit and a wick structure which transfers the melt liquid to the outer wall of the first conduit.

**Patentansprüche**

1. Verfahren zum Trennen bzw. Separieren eines ein Lösungsmittel und mindestens einen leicht flüchtigen gelösten Stoff enthaltenden Gemisches durch Bilden einer Masse von Lösungsmittelkristallen mit den Verfahrensstufen des Entspannungsverdampfens des Gemisches unter vermindertem Druck zur gelichzeitigen Bildung von Kristallen des Lösungsmittels, bei dem durch das Entspannungsverdampfen ein erstes Gas bzw. erster Dampf, der einen niedrigeren Druck als der Tripelpunktdruck des Lösungsmittels aufweist, und eine erste Lösungsmittelkristalle aufweisende kondensierte Masse erzeugt wird, und des Kühlens des ersten Gases bzw. Dampfes unter einem geringeren Druck als der Tripelpunktdruck zum Überführen des ersten Gases bzw. Dampfes in eine zweite kondensierte Masse, welche eine Masse von Lösungsmittelfeststoff enthält, gekennzeichnet durch Erschmelzen bzw. Verflüssigen des Lösungsmittelfeststoffs zum Überführen der zweiten kondensierten Masse in eine Schmelze bzw. Flüssigkeit, Verdampfen einer Masse der Lösungsmittelflüssigkeit zur Bildung eines zweiten Gases bzw. zweiten Dampfes mit höherem Druck als der Tripelpunktdruck und Wärmetauschen zwischen dem zweiten Dampf und den Lösungsmittelkristallen, die aus der ersten kondensierten Masse stammen, zum Kondensieren des zweiten Gases bzw. Dampfes und zum Schmelzen bzw. Verflüssigen der Lösungsmittelkristalle.

2. Verfahren nach Anspruch 1, dadurch gekennnzeichnet, daß die Verfahrensstufe des Wärmetauschens zwischen dem zweiten Gas bzw. Dampf und den Lösungsmittelkristallen dadurch bewirkt wird, daß der zweite Dampf bzw. das zweite Gas in direkten Kontakt mit der ersten kondensierten Masse gebracht wird.

3. Verfahren nach Anspruch 1, gekennzeichnet durch die weitere Verfahrensstufe des Trennens der ersten kondensierten Masse in eine Masse gereinigter Lösungsmittelkristalle und in ein Konzentrat und dadurch, daß das Wärmetauschen anschließend zwischen dem zweiten Gas bzw. Dampf und mindestens einem Teil der Masse der gereinigten Lösungsmittelkristalle durchgeführt wird, um die Kristalle aufzuschmelzen bzw. zu verflüssigen und den zweiten Dampf zu kondensieren, so daß sowohl die Schmelze bzw. Flüssigkeit als auch das Kondensat aus gereinigtem Lösungsmittel bestehen.

4. Verfahren nach Anspruch 3, dadurch gekennzeichnet, daß die Verfahrensstufe des Wärmetauschens zwischen den zweiten gas bzw. Dampf und den gerinigten Lösungsmittelkristallen durch Direktkontaktieren des zweiten Gases bzw. Dampfes mit der gereinigte Lösungsmittelkristalle enthaltenden Masse bewirkt wird.

5. Verfahren zum Gefrieren und Aufschmelzen bzw. Verflüssigen eines ein flüchtiges Lösungsmittel und mindestens einen leicht flüchtigen gelösten Stoff aufweisenden Gemisches mit dem ersten Verfahrensschritt des Entspannungsverdampfens der Mischung, um ein erstes Gas bzw. einen ersten Dampf mit einem geringeren Druck als dem Tripelpunktdruck des Lösungsmittels und eine erste eine Masse aus Lösungsmittelkristallen aufweisende kondensierte Masse zu bilden, und einem zweiten Verfahrensschritt der Wärmeableitung vom ersten Gas bzw. Dampf bei einem niedrigeren Druck als dem Triplepunktduck zum Überführen des ersten Gases bzw. Dampfes in eine zweite eine Masse aus Lösungsmittelfeststoff aufweisende kondensierte Masse, dadurch gekennzeichnet, daß das Gemisch in einem System behandelt wird, das eine Vakuumgefrierzone (Zone 1), eine Dampf- bzw. Gasbehandlungszone mit zwei oder mehr Dampfbehandlungssubzonen (Zone 2), eine Schmelz- bzw. Verflüssigungszone (Zone 3) erste Ventil- bzw. Absperrorgane zwischen der Vakuumgefrierzone und den Dampf- bzw. Gasbehandlungssubzonen und ein Leitungssystem zum Transport von Betriebsmittel in die Dampf- bzw.

Gasehandlungszone zum Wärmeentzug vom und zur Wärmezuführung zu der Dampf- bzw. Gasbehandlungszone aufweist, daß die erste Verfahrensstufe des Entspannungsverdampfens der Mischung in der Vakuumgefrierzone durchgeführt wird, während die Zone in Gasverbindung mit einer oder mehreren Gasbehandlungssubzonen steht, daß der zweite Verfahrensschritt durch Zuführung des ersten Gases bzw. Dampfes in die Gas- bzw. Dampfbehandlungssubzonen und durch Wärmeentzug durch das Leitungssystem durchgeführt wird, daß in einem dritten Verfahrensschritt Wärme der zweiten kondensierten Masse zugeführt wird, während diese druckmäßig von der Vakuumgefrierzone isoliert ist, um den Lösungsmittelfeststoff zu schmelzen bzw. zu verflüssigen und eine Schmelzflüssigkeit zu bilden, daß in einer vierten Verfahrensstufe Wärme einer Masse von Lösungsmittelflüssigkeit in der Gasbehandlungszone zugeführt wird, um Lösungsmittelflüssigkeit zu verdampfen, während diese druckmäßig von der Vakuumgefrierzone isoliert ist und in Druckverbindung mit der Schmelz- bzw. Verflüssigungszone steht und ein zweites Gas bzw. Dampf mit einem höheren Druck als der Tripelpunktdruck des Lösungsmittels bildet, und daß in einem fünften Verfahrenschritt der zweite Dampf bzw. das zweite Gas und eine von der ersten kondensierten Masse stammende Masse von Lösungsmittelkristallen in die Schmelz- bzw. Verflüssigungszone gegeben und eine Wärmetauschbeziehung zwischen diesen hergestellt wird, um den zweiten Dampf bzw. das zweite Gas zu kondensieren und die Masse von Lösungsmittelkristallen zu schmelzen bzw. zu verflüssigen.

6. Verfahren nach Anspruch 5, gekennzeichnet durch den weiteren Verfahrensschritt des Trennens der ersten kondensierten Masse in eine Masse aus gereinigten Lösungsmittelkristallen und eine Mutterlauge bzw. Mutterflüssigkeit, worauf die Masse der gereinigten Lösungsmittelkristalle durch Wärmetauschen mit den zweiten Dampf bzw. Gas dem Aufschmelzen bzw. Verflüssigen unterworfen wird.

7. Verfahren nach einem der Ansprüche 1 bis 6, dadurch gekennzeichnet, daß der erste Verfahrensschritt des Entspannungsverdampfens des Gemisches und der fünfte Schritt des gleichzeitigen Kondensierens des zweiten Dampfes bzw. Gases und Schmelzens bzw. Verflüssigens der Masse von Lösungsmittelkristallen mindestens im wesentlichen kontinuierlich vorgenommen werden.

8. Verfahren nach einem der Ansprüche 1 bis 6, dadurch gekennzeichnet, daß Wasser als Lösungsmittel verwendet wird.

9. Verfahren zum Gefrieren und Verflüssigen eines ein flüchtiges Lösungsmittel und mindestens einen leicht flüchtigen gelösten Stoff aufweisenden Gemisches, dadurch gekennzeichnet, daß das Gemisch in Einem System behandelt wird, das eine Vakuumgefrier-Kristallverflüssigungszone (Zone 1) und eine Gas- bzw. Dampfbehandlungszone (Zone 2) und ein Leitungssystem zum Transport von Betriebs- bzw. Behandlungsmitteln in die Gasbehandlungszone zum Abführen von Wärme aus dieser und zum Zuleiten von Wärme in diese aufweist, und daß das Verfahren folgende Verfahrensschritte enthält:

1. Entspannungsverdampfen der Mischung in der Zone 1, um ein erstes Gas bzw. Dampf un bilden, das einen niedrigeren Druck als den Tripelpunktdruck des Lösungsmittels aufweist, und um eine erste kondensierte Masse zu bilden, die Lösungsmittelkristalle enthält;

2. Zuführen des ersten Gases bzw. Dampfes in die Zone 2 und Abführen von Wärme durch das Leitungssystem, um das erste Gas bzw. den ersten Dampf in eine zweite kondensierte Masse zu überführen, welche eine Masse aus Lösungsmittelfeststoff enthält, mit der Maßgabe, daß die ersten und zweiten Verfahrensschritte gleichzeitig durchgeführt werden;

3. Zuführen von Wärme zur zweiten Kondensierten Masse in der Zone 2, um die zweite kondensierte Masse zu schmelzen bzw. zu verflüssigen und eine Schmelzflüssigkeit zu bilden;

4. Zuführen von Wärme zu einer Masse von Lösungsmittelflüssigkeit in der Zone 2, um die Lösungsmittelflüssigkeit zu verdampfen und ein zweites Gas bzw. einen zweiten Dampf zu bilden, der eine höheren Druck als den Tripelpunktdruck des Lösungsmittels aufweist, und

5. Zuführen des zweiten Dampfes bzw. Gases in die Zone 1 un Wärmetauschen zwischen dem zweiten Dampf bzw. Gas und der ersten kondensierten Masse, um dadurch den zweiten Dampf bzw. das zweite Gas zu kondensieren und mindestens einen Teil der aus der ersten kondensierten Masse stammenden Kristalle zu schmelzen bzw. zu verflüssigen.

10. Integriertes Dampfbehandlungssystem zum Überführen eines ersten Dampfes bzw. Gases, das eine Hauptsubstanz enthält und das einen niedrigeren Druck als der Tropelpunktdruck der Hauptsubstanz aufweist, in einen zweiten Dampf bzw. ein zweites Gas, das einen höheren Druck als der Triplepunktdruck aufweist, durch Herstellen einer kondensierten Masse, die eine Masse aus Feststoff der Substanz aus dem ersten Gas bzw. Dampf aufweist, durch Schmelzen der Feststoffmasse in der kondensierten Masse zur Herstellung einer Masse aus Schmelzflüssigkeit und durch Verdampfen einer Masse der Haupsubstanz in flüssigem Zustand zur Bildung eines zweiten Dampfes bzw. Gases, gekennzeichnet durch eine erste Leitung zum Transport von Betriebs- bzw. Behandlungsmitteln zum Abführen von Wärme, die bei der Bildung der kondensierten masse freigegeben wird, durch die Leitungswand und Zuführen von Wärme, die zum Schmelzen bzw. Verflüssigen und Verdampfen benötigt wird, durch die Leitungswand, Schmelze- bzw. Flüssigkeitsspeicherorgane zum Speichern eines Betrags der Schmelzflüssigkeit derart, daß die Speicherorgane in der Nähe der ersten Leitung angeordnet ist, und eine Dochstruktur, die die Schmelzflüssigkeit zur Außenwand der ersten Leitung führt.

**Revendications**

1. Procédé pour séparer un mélange contenant un solvent et au moins un corps dissous de faible volatilité en formant une masse de cristaux du solvant, comportant les étapes de vaporisation instantanée du mélange sous une pression réduite de manière à former, simultanément, des cristaux du solvant, la vaporisation instantanée produisant une première vapeur ayant une pression inférieure à la pression du point triple du solvant et une première masse condensée contenant les cristaux du solvant, de refroidissement de la première vapeur sous une pression inférieure à la pression du point triple pour transformer la premièr vapeur en une seconde masse condensée contenant une masse de solvant solide, caractérisé en ce qu'ou fait fondre le solvant solide pour convertir la seconde masse condensée en un liquide de fusion et on vaporise une masse de solvant liquide pour former une seconde vapeur ayant une pression supérieure à la pression du point triple, et on effectue un échange de chaleur entre la seconde vapeur et les cristaux de solvant obtenus à partir de la première masse condensée, de manière à condenser la seconde vapeur et à faire fondre les cristaux de solvant.

2. Procédé selon la revendication 1, caractérisé en ce que l'étape d'exécution d'un échange de chaleur entre la seconde vapeur et les cristaux de solvant est effectuée en amenant la seconde vapeur en contact direct avec la première masse condensée.

3. Procédé selon la revendication 2, caractérisé par l'ètape supplémentaire de séparation de la première masse condensée en une masse de cristaux de solvant purifiés et un concentré, l'échange de chaleur étant effectué en suite entre la seconde vapeur et au moins une partie de la masse de cristaux de solvant purifiés pour faire fondre les cristaux et condenser la seconde vapeur, le produit de fusion et le condensat étant tous les deux du solvant purifié.

4. Procédé selon la revendication 3, caractérisé en ce que que l'étape d'exécution d'un échange de chaleur entre la seconde vapeur et les cristaux de solvant purifiés est effectuée en amenant la seconde vapeur en contact direct avec la masse contenant les cristaux de solvant purifiés.

5. Procédé pour soumettre un mélange contenant un solvent volatile et au moins un corps dissous de faible volatilité à des opérations de congélation et de fusion, comportant une première étape de vaporisation instantanée du mélange pour former une première vapeur ayant une pression inférieure à la pression du point triple du solvant et une première masse condensée contenant une masse de cristaux du solvant et une deuxième étape d'élimination de la chaleur de la première vapeur à une pression inférieure à la pression du point triple pour transformer la première vapeur en une seconde masse condensée contenant une masse de solvant solide, caractérisé en ce que la mélange est traité dans un système comportant une zone de congélation sous vide (zone 1), une zone de traitement de vapeur comprenant des zones subdivisionnaires de traitement de vapeur au nomre de deux ou davantage (zone 2), une zone de fusion (zone 3), des premiers moyens de vannage intercalés entre la zone de congélation sous vide et les zones subdivisionnaires de traitement de vapeur, et des moyens de conduite pour transporter un fluide de travail dans la zone de traitement de vapeur pour enlever de la chaleur et amener de la chaleur à ladite zone de traitement de vapeur, la première étape de vaporisation instantanée du mélange étant effectuée dans la zone de congélation sous vide, tandis que cette zone est en communication, pour la vapeur, avec une ou plusieurs zones subdivisionnaires de traitement de vapeur, et la deuxième étape étant effectuée en envoyant la première vapeur dans les zones subdivisionnaires de traitement de vapeur et en enlevant de la chaleur par les moyens de conduite, le procédé comporant en outre une troisième étape de fourniture de chaleur à la seconde masse condensée alors que cette seconde masse condensée est isolée, en ce qui concerne la pression, de la zone de congélation sous vide, pour faire fondre le solvant solide et former un liquide de fusion, une quatrième étape de fourniture de chaleur à une masse de solvant liquide dans la zone de traitement de vapeur pour vaporiser le solvant liquide pendant que ce solvant liquide est isolé, en ce qui concerne la pression, de la zone de congélation sous vide et est en communication, pour la pression, avec la zone de fusion, en formant une seconde vapeur ayant une pression supérieure à la pression du point triple du solvant et une cinquième étape d'envoi de la seconde vapeur et d'une masse de cristaux de solvant obtenue à partir de la première masse condensée dans la zone de fusion, en établissant entre eux une relation d'échange de chaleur pour condenser la seconde vapeur et pour fondre la masse de cristaux de solvant.

6. Procédé selon la revendication 5, caractérisé par l'étape supplémentaire de séparation de la première masse condensée en une masse de cristaux de solvant purifiés et une liqueur mère, la masse de cristaux de solvant purifiés étant ensuite soumise à l'opération de fusion par échange de chaleur avec la seconde vapeur.

7. Procédé selon l'une quelconque des revendications 1 à 6, caractérisé en ce que ladite première étape de vaporisation instantanée du mélange et ladite cinquième étape de condensation de la seconde vapeur et de fusion simultanée de la masse de cristaux de solvant sont effectuées de façon, au moins sensiblement, continue.

8. Procédé selon l'un quelconque des revendications 1 à 6, caractérisé en ce que le solvant est l'eau.

9. Procédé pour soumettre un mélange contenant un solvant volatile et au moins un corps dissous de faible volatilité à des opérations de congélation et de fusion, caractérisé en ce que le mélange est traité dans un système comportant une zone de fusion de cristaux et de congélation sous vide (zone 1) et une zone de traitement de vapeur (zone 2), et des moyens de conduite pour transporter un fluide de travail dans la zone de traitement de vapeur afin d'enlever le la chaleur et de fournir de la chaleur à cette zone, le procédé comportant une première étape de vaporisation instantanée du mélange dans la zone 1 pour former une première vapeur ayant une pression inférieure à la pression du point triple du solvant et une première masse condensée contenant des cristaux de solvant, et une deuxième étape d'envoi de la première vapeur dans la zone 2 et d'enlèvement de chaleur par les moyens de conduite pour transformer la première vapeur en une seconde masse condensée contenant une massse de solvant solide, ladite première étape et ladite deuxième étape étant conduites simultanément, une troisième étape de fourniture de chaleur à la deuxième masse condensée dans la zone 2 pour faire fondre cette seconde masse condensée et former un liquide de fusion, une quatrième étape de fourniture de chaleur à une masse de solvant liquide dans la zone 2 pour vaporiser le solvant liquide et former une seconde vapeur ayant une pression supérieure à la pression du point triple du solvant, et une cinquième étape d'envoi de la seconde vapeur dans la zone 1 et d'établissement d'une relation d'échange de chaleur entre la seconde vapeur et la première masse condensée pour condenser ainsi la seconde vapeur et faire fondre au moins une partie des cristaux obtenus à partir de la première masse condensée.

10. Conduite de traitement de vapeur intégrée pour convertir une première vapeur contenant une substance principale, la vapeur ayant une pression inférieure à la pression du point triple de la substance principale, en une seconde vapeur ayant une pression supérieure à ladite pression du point triple en formant une masse condensée contenant une masse du solide de la substance de la première vapeur, un faisant fondre la masse du solide de la masse condensée pour former une masse de liquide de fusion et en vaporisant une masse de substance principale à l'état liquide pour former la seconde vapeur, dispositif caractérisé par une première conduite pour transporter un fluide de travail pour éliminer la chaleur dégagée lors de la formation de la masse condensée à travers la paroi de la conduite et pour fournir la chaleur nécessaire pendant les opérations de fusion et de vaporisation à travers la paroi de la conduite, des moyens d'accumulation de produit fondu pour accumular une certaine quantité d liquide de fusion, les moyens d'accumulation de produit fondu étant disposés à proximité de la première conduite, et une structure à mèche transportant le liquide de fusion sur la paroi extérieure de la première conduite.

Figure 1- a

Medium Liquid → Vapor Processing Zone (Zone 3) → Medium Vapor $(P_M)_1$

Vapor Desublimation

7a — — 7b

6

3 — I — 4

Melting Zone (Zone 2)

II — 5

Vacuum Freezing Zone (Zone 1)

8a — — 8b

6

2 — 1

Desublimate Vaporization

Medium Vapor $\frac{(P_M)_2}{(P_M)_3}$ → Medium Liquid

0 078 164

Figure 1-b

Figure 2

Figure 3

Figure 4

## Vapor Processing Conduit for Desublimation - Melting - Vaporization

Fig. 5-a

Fig. 5-b

40a

39

41

42

40b

43

0 078 164

## Desublimation of Low Pressure Vapor

Fig. 6-a

$P_1$

44

Medium at $(P_M)_1$

39

41

Fig. 6-b

45

$P_1$

44

Desublimate

Medium at $(P_M)_1$

39

41

Fig. 6-c

45

$P_1$

44

Medium at $(P_M)_1$

39

41

Melting of Desublimate

Fig. 7-a     Fig. 7-b     Fig. 7-c

Medium at $(P_M)_2$    $P_2$   46

Medium at $(P_M)_2$    $P_2$   46    47 Melt

Medium at $(P_M)_2$    $P_2$

Vaporization of the Melt

Fig. 8-a     Fig. 8-b     Fig. 8-c

51   $P_3$   50   Medium at $(P_M)_3$   49

51   $P_3$   50   Medium at $(P_M)_3$   49   48

$P_3$   Medium at $(P_M)_3$

0 078 164

Figure 9